# EUROPEAN PATENT APPLICATION

(11) **EP 3 780 639 A1**
(43) Date of publication of application: **17.02.2021**
(21) Application number: 19191455.5
(22) Date of filing: 13.08.2019
(51) Int. Cl.: H04N 21/45, H04N 21/482, H04N 21/431

(54) **SYSTEM AND METHOD FOR DISPLAYING ELECTRONIC PROGRAM GUIDE DATA**

(71) Applicant: Advanced Digital Broadcast S.A., 1293 Bellevue (CH)
(72) Inventor: Polak, Michal, 65-119 Zielona Gora (PL)
(74) Representative: Blonski, Pawel

(57) **Abstract**

A method for displaying electronic program guide data, said method comprising the steps of: (a) receiving metadata describing available events, said metadata comprising information describing at least one genre associated with each event; (b) receiving a selection of a subset, of available genres, comprising at least two genres; (c) filtering said events for a selected time window based on said subset of available genres; (d) generating an electronic program guide output data comprising only services having at least one event meeting the filtering criteria.

## Description

### TECHNICAL FIELD

The present invention relates to a system and method for displaying electronic program guide data. In particular, the present invention relates to improvements in data filtering and grid-type EPG formatting.

### BACKGROUND OF THE INVENTION

Devices like Set-Top-Boxes (STB) 210 are capable of receiving various types of data such as video, audio, subtitles - collectively called components - along with additional information such as Electronic Program Guide.

Components of various types form services. For example, a service may include one video component, two audio components (with different languages or different encoding/quality) and ten subtitles components (for a number of languages and/or for hard-of-hearing audience).

A user may choose, which service to select by means of a Graphical User Interface (GUI) 214, resulting in displaying of a subset of the service's components (for example, the video component and one of the audio components).

Additionally, the STB 210 usually receives further data, for example said EPG information comprising metadata describing programs (events), for example genres, description, parental rating information and the like.

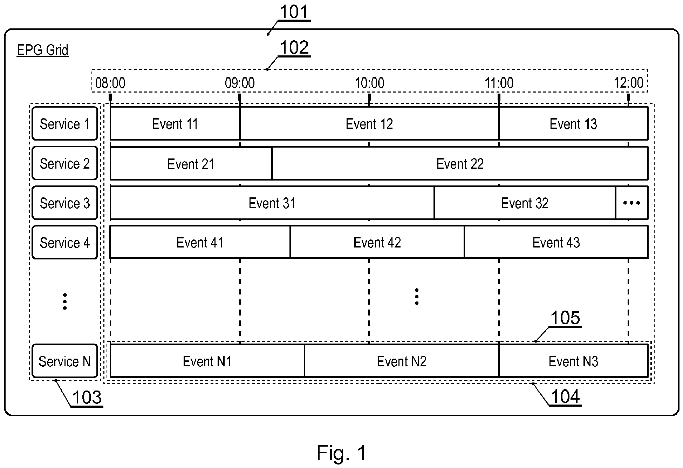

Typically, EPG events are presented to a user by a GUI's screen like an EPG grid or an EPG list. An example of the EPG grid 101 is shown in Fig. 1. The EPG grid comprises a time axis (horizontal) 102 showing time (sometimes a date, a day of a week or relative information as "tomorrow") that enables to unambiguously present individual events ordered by time.

Events are presented in a context of services, which typically are displayed on the left part of the EPG grid 101, in a service list 103. For each service, there is a row listing associated events. In Fig. 1, a service list 103 comprises services named "Service 1", "Service 2", ... to "Service N" and there are rows having events 104, for example a row 105, with events for the service named "Service N".

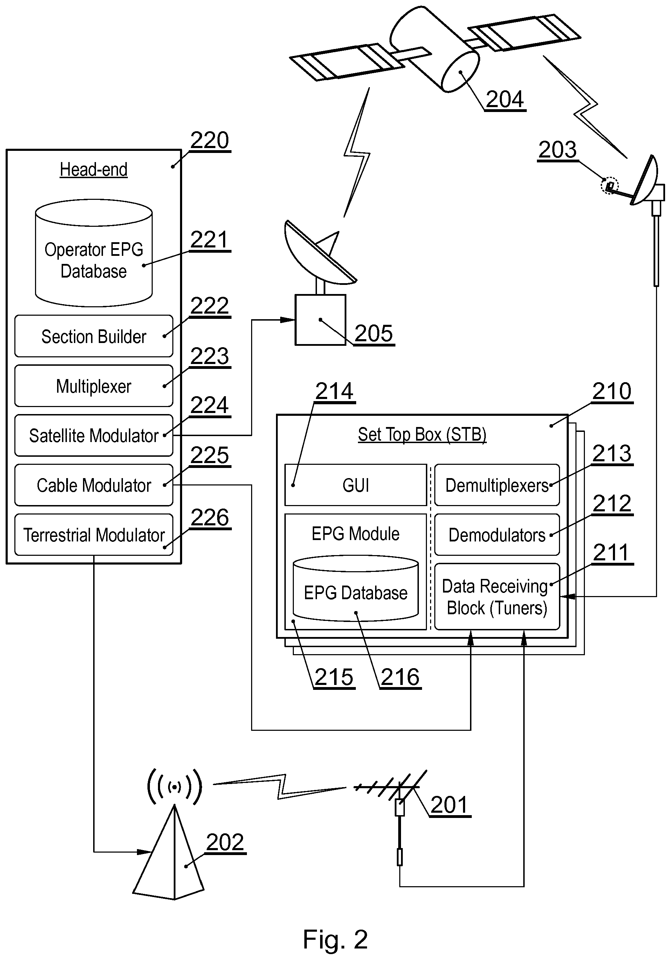

As depicted in Fig. 2, EPG information is prepared on an operator's head-end 220 (typically there are many such operators in broadcast environment) where the EPG database 221 is converted into sections (for example in form of the Event Information Table (EIT) structure or a proprietary format) by the Section Builder 222 and after multiplexing with other data (as service components or other types of sections) by the Multiplexer 223, the data is modulated by a relevant Satellite 224/Cable 225/Terrestrial 226 Modulator(s) and delivered to STBs 210 via a satellite uplink 205/a satellite 204/a satellite antenna 203, a cable medium or a terrestrial broadcast station 202 and a receiving antenna 201.

Another embodiment may include an Internet Protocol (IP) medium with bidirectional communication (not shown).

The data is received at the STB 210 by a tuner(s) 211, handled by the Demodulators 212 and the Demultiplexers 213.

Then EPG sections are processed by the EPG module 215 and inserted into the EPG database 216, so that it could be presented to the user by the GUI 214 in form, for example, of the EPG grid 101.

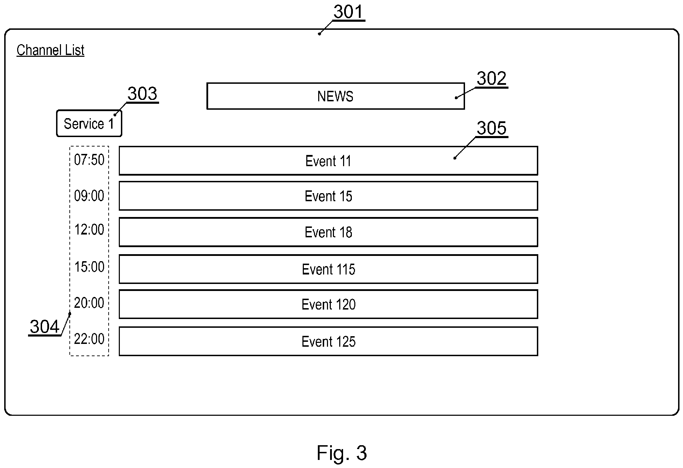

Typically, the EPG information is presented without filtering, meaning that all events may be displayed. Some GUIs enable filtering of events, for example by genres as Sports, News, Music, Movies, Children's and the like. However, in known state-of-the-art GUI implementations, a single genre filtering-out at a time is available only and the results are presented typically as the EPG list 301 of events belonging to the selected genre as shown in Fig. 3.

The list includes a graphical element 302 indicating the genre selected (if any), a name of the service 303, the time axis (vertical) 304 with event commencing times and rows including events' names - for example an event 305 starting at 07:50. In case of the EPG gird, events of the selected genre may be the only ones displayed (this may result in empty rows or cells in EPG grid) or distinguished by a colour/an icon (not shown).

Since the user may either have no genres selected or only one genre is allowed to be chosen at a time, it is inconvenient for the user to determine what events of the user's interest are available. The user has to either display all events regardless of their genres and try to find an item (event) she or he is interested in, or the user has to select a genre one-by-one to see events that are likely to be watched by her or him.

Furthermore, it is unhandy to set reminders or schedule recordings of events which are displayed when a single genre filtering-out is active, as the user cannot see reminder/schedules already set for events of other genres. This situation is likely to lead to conflicts between reminders or recordings. Therefore, it is desirable to solve this problem.

The aim of the development of the present invention is an improved and effective method and apparatus for displaying electronic program guide data.

### SUMMARY AND OBJECTS OF THE PRESENT INVENTION

An object of the present invention is a method for displaying electronic program guide data, said method comprising the steps of:
(a) receiving metadata describing available events, said metadata comprising information describing at least one genre associated with each event;
(b) receiving a selection, of a subset of available genres, comprising at least two genres;
(c) filtering said events for a selected time window based on said subset of available genres;
(d) generating an electronic program guide output data comprising only services having at least one event meeting the filtering criteria.

Preferably, said list of selected genres is prioritized.

Preferably, the method further comprises the steps of:
- receiving a navigation command requesting scrolling said electronic program guide output data by adjusting said time window;
- re-executing steps (c) and (d) of the method.

Preferably, each priority is associated with an individual marking scheme such as a color or hatching.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for displaying electronic program guide data. Further details and features of the present invention, its nature and various advantages will become more apparent from the following detailed description of the preferred embodiments shown in a drawing, in which:
Fig. 1 shows an example of an EPG grid;
Fig. 2 shows an example of a system for broadcasting (head-end) and reception/presentation (STB) of audio/video data and EPG information;
Fig. 3 shows an example of an EPG list with filtered-out events;
Fig. 4 shows an example of a Genre Priority List;
Fig. 5 shows an example of an EPG grid with events colored according to the priorities;
Fig. 6 depicts a method responsible for filtering-out and coloring events in an EPG grid;
Fig. 7 shows an example of filtering-out service/events in an EPG grid;
Fig. 8 depicts a method enabling a GUI to display services' rows in response to the user's change of the current time range in the EPG grid.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

According to the basic concept of the Invention an EPG GUI 214 is extended to let the user select more than one genres at a time. The number of selected genres varies from one to the total number of unique genres available. In an embodiment the list of available genres may include: "Sport", "News", "Movies", "Education", "Children's", "Music".

When the user selects one or more of these genres, only events that are classified as of the chosen genres are presented by the GUI 214 using for example the EPG grid 101. The list of genres is preferably prioritized, for example with the highest priority genre first (at the top).

In another embodiment, the list of prioritized genres enables the EPG to solve possible conflicts between reminders or scheduled recordings in an automated manner, without user's interaction (if such an option is set in the GUI's settings).

Furthermore, in another embodiment, if for a given time window there are not any events associated with the list of selected genres for a particular service, that service is not presented in the EPG grid 101, so that more services - and hence events - that the user is likely to be interested in, may be displayed at once. Also, when the user moves the time window in the EPG grid 101 (changing values on the time axis backward or forward), service rows may be hidden or appear automatically, depending if there is at least one event with the selected genre for a given service and the current time window. Again, this lets the GUI 214 display events that are likely to be watched by the user.

In yet another embodiment, the GUI may inform the user that an event of a higher priority than the currently watched one is about to commence. Also, the GUI may present a short list of events of preferred genres being currently broadcast, ordered by genre priorities. Thanks to this, the user may switch between events she or he is interested in a comfortable and quick way.

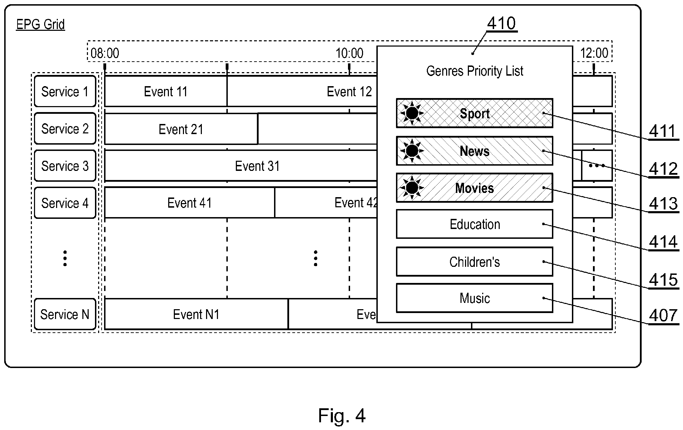

In an embodiment, as shown in Fig. 4, the GUI 214 is capable of displaying a Genre Priority List 410 over the EPG, in particular the grid 101. The user may select which genres are effective and in which priority order. For the sake of an example, the genre "Sport" 411 is selected by the user and is the top priority. Further genres - selected and ordered by priority - are "News" 412 and "Movies" 413.

Each priority is associated with an individual color (including greyscale). In general, each priority is associated with a distinctive marking, which may be a hatching or a graphical symbol or the like.

Non-selected genres are "Education" 414, "Children's" 415 and "Music" 416. Since each priority it assigned with a dedicated color, whenever the order of genres is changed, colors remain the same at a given priority, just the genre is replaced. This entails that events of a given priority are always displayed with the same color in the EPG grid, regardless of the genre associated with it through the Genre Priority List 410.

Thanks to this approach, the user can easily identify an event's priority in the EPG grid and she or he will be aware, which event will be presented or recorded if a conflict occurs between overlapping events.

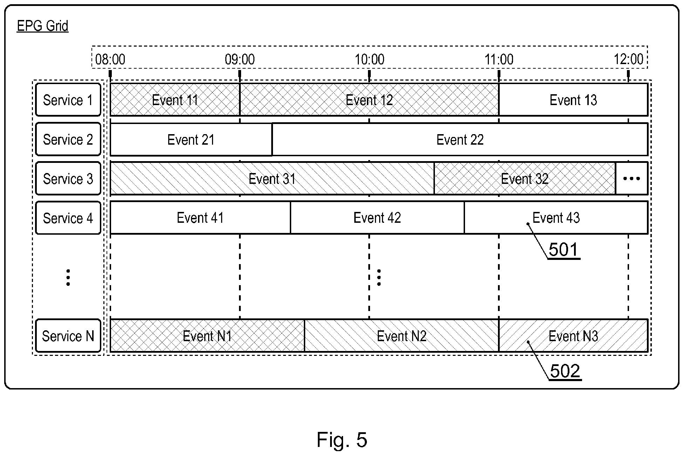

In another embodiment events are presented in the EPG grid as shown in Fig. 5, where greyscalled (or otherwise a distinctively marked) events were selected and ordered by the user by means of the Genre Priority List 410. An example of such an event is "Event N3" 502. If an event belongs to a genre that was not selected in the Genre Priory List, it is displayed in the EPG grid in the standard manner. An example of a non-selected event is an "Event 43" 501.

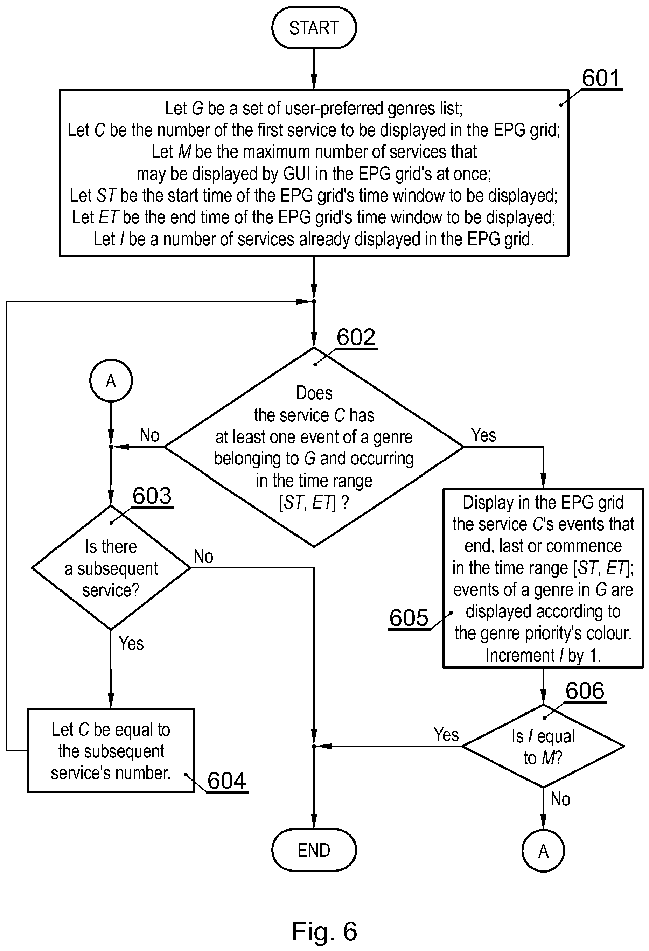

A method for filtering-out and coloring events in the EPG grid is depicted in Fig. 6. The method begins at step 601, where the following initial assignments are made:
G is a set of user-preferred genres list (i.e. selected genres in the Genre Priority List 410),
C is a number of the first service to be displayed in the EPG grid (initially set for example to 1 being the first service available);
M is a maximum number of services that may be displayed by GUI in the EPG grid's at once (it is assumed that M is greater than zero) (this may be a default parameter and may be influenced by current EPG display state);
ST is a start time of the EPG grid's time window that is to be displayed (this may be a default parameter such as current time; further a user may modify this parameter by adjusting GUI setup e.g. navigation, zoom commands), while
ET is an end time of that time window; and
I is a number of services already displayed in the EPG grid, its value is set initially to zero since there are not any services displayed.

Then, the method advances to step 602, where it is checked if the service C has at least one event occurring in the time range [ST, ET], i.e. they are to be displayed in the EPG grid. If there is at least one such an event, the method jumps to step 605, at which all C service's events that end, last or commence in the time range [ST, ET] are displayed in the service's row of the EPG grid, as shown in Fig. 5; events of a genre in G are displayed according to the genre priority's color. The I is incremented by one and the method advances to step 606, where it is checked if I is equal to M. If it is, no more services and their events may be displayed in the EPG grid, therefore the method ends. Further services' events (if any) are not displayed.

Otherwise, the method advances to step 603, at which it is checked if there is a subsequent service (that was not checked yet whether its events may be displayed). If there are no more such services, the method ends, otherwise C is set to a subsequent service's number and the method reaches step 602 again.

If a previous or possibly further check at step 602 is negative, the method jumps to step 603 described above. This method ends when up to M service rows, at least one event (in a service row) of which has its genre in in the selected Genre Priority List 410, is displayed.

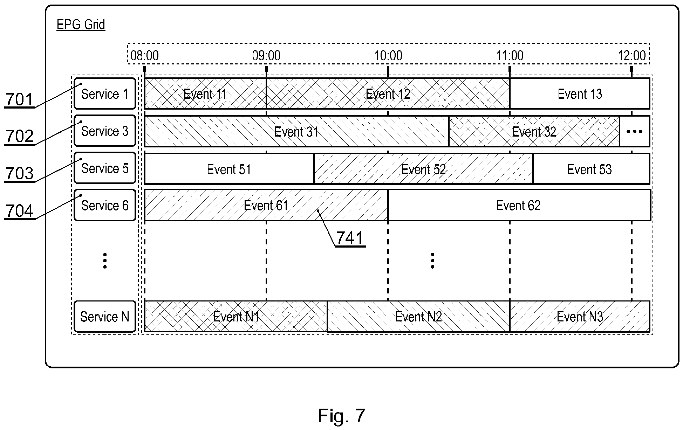

In an embodiment, a result of executing of the above method is shown in Fig. 7, where not all services are shown, as only a part of them has at least one event matching the user's preferences.

An example of such a service is a "Service 6" 704, which has a user-preferred event "Event 61" 741. It is easy to notice that several services' events were not displayed, e.g. there are gaps between "Service 1" 701 and "Service 3" 702, and also "Service 3" 702 and "Service 5" 703. This means that there were not any events belonging to said two services ("Service 2" and "Service "4" - not shown). Thus, these services have not been displayed because they are lacking events, for the time range/window [ST, ET], that have a genre matching the user's preferences.

A user may move the EPG grid's content left and right, which results in changing the time range/window [ST, ET] for presented events. This entails also that some services may have no more events with genres preferred by the user (they should be hidden), while other services - that have not been displayed - may have such events (these services' events should be displayed).

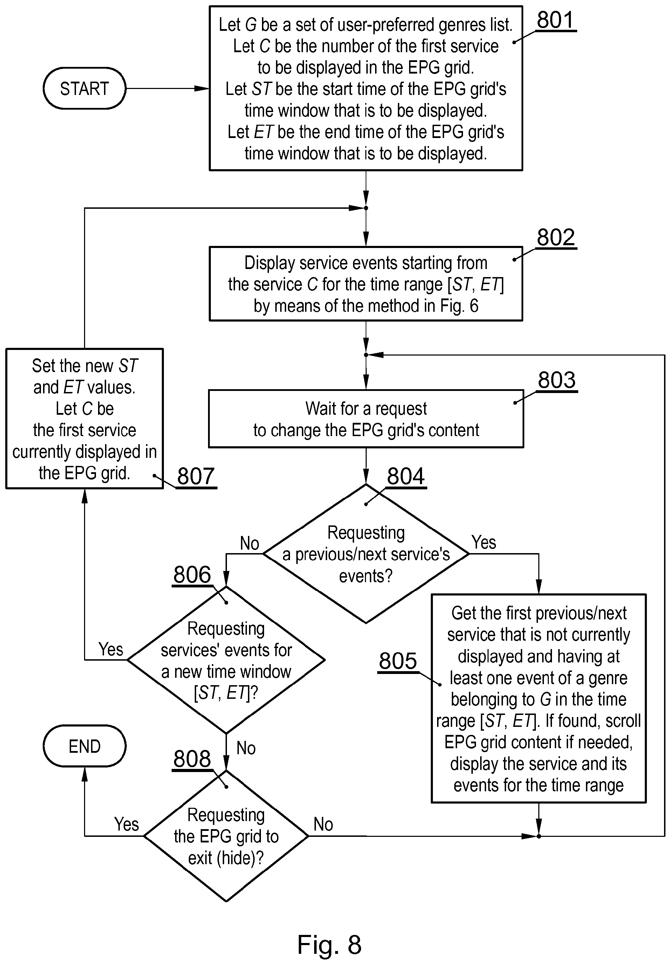

A method depicted in Fig. 8 enables the GUI 214 to show or display services' rows in response to a user's change of the current time range in the EPG grid. The method starts at step 801, where a number of initial assignments is performed:
G is a set of user-preferred genres list (selected genres in the Genre Priority List 410),
C is a number of the first service to be displayed in the EPG grid,
ST is a start time of the EPG grid's time window that is to be displayed, while
ET is an end time of that time range.

Then, at step 802, the EPG grid is initially filled with services' events starting from the service C for the time range/window [ST, ET] by taking advantage of the method shown in Fig. 6 described above.

Subsequently, at step 803, the method waits for a user's action, i.e. a request to change the EPG grid's content in a response to moving the event time range, scrolling services down/up or exiting the EPG grid. Once a request is triggered, the method advances to step 804, where it is checked if the user is requesting to scroll services, i.e. requesting a previous or next service that is currently not shown in the EPG grid. If the result of that check is affirmative, the method jumps to step 805, at which the method attempts to get the previous or next service that has not been displayed and which has at least one event of a genre belonging to G and occurring in the time range[ST, ET]. If the service is found, the EPG grid content is scrolled - if a room for the new service's events is needed - and then the service name along with its events for the time range [ST, ET] are displayed. Then the method reaches step 803 again.

If the result of the check at step 804 was negative, at step 806 it is checked if the user is requesting to move the time window backward of forward, i.e. events for a new values ST and ET of the time window (range). If true, at step 807 the new ST and ET values are set and C is assigned with the first service that is currently displayed in the EPG grid. Then the method jumps to step 802 for refreshing the EPG grid's content. If the result of the check at step 806 was negative, the method reaches step 808, where it is checked if the user is requesting to exit the EPG grid. If true, the method ends, otherwise it jumps to step 803.

Thanks to this method, the GUI 214 may dynamically show only these services that contain events of the user's interest and hide these that do not. This entails that services that do not contain events with preferred genres for a given time range will be not unnecessary displayed and take room (rows) in the EPG grid.

In another embodiment an EPG list (similar to Fig. 3, but having more than one genre selected, is allowed), where events are displayed vertically, may contain only events of user-preferred genres. This helps the user to focus on the content she or he is likely to watch.

In another embodiment, an event of a given genre and hence priority may be manually altered by the user or automatically by the GUI (e.g. aided by a recommendation system) to another priority. This is useful when the user wants to avoid an undesired result of a conflict resolution. An example includes two overlapping events of "Sports" (higher priority) and "News" (lower priority) genres. Since the user may prefer to watch/record the "News" event, its priority may be changed to the highest priority and the "Sports" event to a lower one. A similar situation may occur when two or more events with the same priority are broadcast simultaneously. Thanks to the possibility of fine-tuning individual event's priority, a possible conflict may be solved in advance.

It is to be noted that whenever the present specification mentions to displaying or showing by means of a GUI, there is meant a generation of an appropriate output signal comprising image data to be presented by a suitable display device such as a television screen configured to appropriately process said signal comprising image data.

In the presented embodiments the GUI 214 enables the user to create a list of genres of her or his preferences (selected genres in the Genre Priority List 410). Thanks to that list, the GUI may present to the user a filtered-out subset of events. Because unwanted events are not displayed, there is more room for these events of the user's choice, and hence the user is likely to find events she or he is interested in more quickly. Therefore, the invention provides a useful, concrete and tangible result.

Moreover, events are prioritized by genres and each selected genre has assigned a priority-based colour, so the user may refer to or find events of her/his preferences in a more comfortable way and, for example, display additional information like the extended description. When the user is changing the time window (range), individual services (displayed in rows in the EPG grid) may be dynamically shown together with their events or hidden. This means that the events are always displayed in a concise view.

The user or the GUI may also control possible conflicts that could appear when two or more events of the user's preferences are available at the same time. The GUI may automatically select the event of a higher priority (which may be overwritten by the user or a recommendation system) for viewing or recording. Finally, the GUI may display a short list with currently being broadcast events of the user-preferred genres, so that the user could quickly zap over these events or decide which should be recorded.

Details of the respective input data processing as well as output signals have been presented herein, thus the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for displaying electronic program guide data may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for displaying electronic program guide data, said method comprising the steps of:
(a) receiving metadata describing available events, said metadata comprising information describing at least one genre associated with each event;
(b) receiving a selection, of a subset of available genres, comprising at least two genres;
(c) filtering said events for a selected time window based on said subset of available genres;
(d) generating an electronic program guide output data comprising only services having at least one event meeting the filtering criteria.

2. The method according to claim 1 wherein said list of selected genres is prioritized.

3. The method according to claim 1 wherein the method further comprises the steps of:
• receiving a navigation command requesting scrolling said electronic program guide output data by adjusting said time window;
• re-executing steps (c) and (d) of the method.

4. The method according to claim 2 wherein each priority is associated with an individual marking scheme such as a color or hatching.

5. A computer readable medium storing computer-executable instructions performing all the steps of the computer-implemented method according to claim 1 when executed on a computer.
